# EUROPEAN PATENT SPECIFICATION

(11) **EP 4 361 025 B1**
(45) Date of publication and mention of the grant of the patent: **18.02.2026**
(21) Application number: 23192458.0
(22) Date of filing: 21.08.2023
(51) Int. Cl.: B64C 3/20

(54) **AIRCRAFT WING STRUCTURE**
FLUGZEUGFLÜGELSTRUKTUR
STRUCTURE D'AILE D'AVION

(30) Priority: 31.10.2022 GB 202216083
(43) Date of publication of application: 01.05.2024
(73) Proprietor: Airbus Operations Limited, Bristol BS34 7PA (GB)
(72) Inventor: EDWARDS, Henry, Bristol,, BS34 7PA (GB)
(74) Representative: Hucker, Nerys

(56) References cited:
- US-A- 4 749 155
- US-A1- 2013 320 142
- US-B2- 10 906 628
- US-B2- 9 957 036
- GIULIO ROMEO GIACOMO FRULLA MARIO BUSTO: "Nonlinear angle of twist of advanced composite wing boxes under pure torsion.", JOURNAL OF AIRCRAFT, vol. 31, no. 6, 6 November 1994 (1994-11-06) - 6 December 1994 (1994-12-06), RESTON, VA, pages 1297 - 1302, XP002810907

## Description

### FIELD OF TECHNOLOGY

This invention relates to an aircraft wing structure, such as a wing box, wing tip or winglet. The invention also concerns a wing comprising such a structure, an aircraft comprising such a structure, a component of such a structure and a method of manufacturing an aircraft wing structure.

### BACKGROUND

Aircraft wings commonly comprise a wing box structure (also known as a torsion box). The wing box typically includes front and rear spars that extend along the span of the wing box, and ribs that extend chord-wise between the front and rear spars. Upper and lower wing covers extend between the spars to form the upper and lower boundaries of the wing box. Leading and trailing edge structures may be attached to the wing box so as to extend forward and aft of the front and rear spars respectively. The leading edge and trailing edge structures may include flight control surfaces, such as slat, flaps and spoilers.

The various components of a wing box are joined by drilling holes through adjacent components and installing rivets or other fasteners in the holes. According to this conventional method, each wing includes many joined components, and each component must be joined to the others. Often, at least some of the joints must be formed manually, for example where the joints are formed at internal locations in the wing that are difficult to access using automated joining machines. In order to assemble a wing, each of the components must be fastened together in a predetermined sequence, taking account of the tolerance stack at each stage. This is a time-consuming process. Furthermore, the fasteners and the connection portions of the various components contribute to the total weight of the final wing.

The paper entitled "Nonlinear angle of twist of advanced composite wing boxes under pure torsion" (Journal of Aircraft Vol. 31, No. 6, November-December 1994) describes the construction of a specimen wing box comprising two composite structures, each structure comprising a skin panel and two webs, which are bolted together with the webs overlapping. US 9957036 describes a wing box having an n-shaped spar arranged to overlap discrete front and rear spar components and the upper wing skin.

### BRIEF SUMMARY OF THE TECHNOLOGY

The invention provides an aircraft wing structure comprising first and second unitary shell structures, each shell structure comprising a partial front spar, a partial rear spar and a wing skin; the partial front spars of each shell structure and the partial rear spars of each shell structure being arranged to overlap to form front and rear spars respectively, characterised in that the first and second shell structures (24, 25) each further comprise at least one further partial spar (26, 27), and the or each further partial spar of each shell structure are arranged to overlap to form at least one further spar.

Preferably, each shell structure is formed of a composite material. Unlike traditional metallic wings, composites combine multiple materials for greater strength, lower weight and better durability. Lighter wings mean savings in fuel, CO2 and operating costs.

Advantageously, the shell structures are bonded together. This reduces or even removes the need for rivets or other fasteners, which provides a significant saving in weight of the final wing and assembly time.

The shell structures may be bonded together via a plurality of discrete adhesive sections, which may be arranged in a herringbone pattern.

Advantageously, the partial front spar of the first shell structure and the partial front spar of the second shell structure are spaced from each other to form an equipment space. Additionally, or alternatively, the partial rear spar of the first shell structure and the partial rear spar of the second shell structure are spaced from each other to form an, or a further, equipment space.

Aircraft systems equipment, such as electrical, hydraulic or communication systems equipment, may be advantageously attached to at least one of the partial front or rear spars.

Preferably, at least one of the first and second shell structures further comprises at least one flange outwardly overhanging one of the partial front and rear spars. The first and second shell structures may each further comprise front and rear flanges arranged to outwardly overhang the front and rear spars.

An aircraft wing structure constructed according to the invention preferably further includes a wing leading edge or trailing edge attached to a flange. The leading edge or trailing edge may include at least one flight control surface. Some or all of the flanges may include leading edge or trailing edge structures.

An aircraft wing structure constructed according to the invention may take the form of a wing box, wing tip or winglet, for example.

The invention further provides an aircraft wing, or an aircraft, incorporating an aircraft wing structure constructed according to the first aspect of the invention.

Another aspect of the invention provides a unitary shell structure configured to be attachable to another shell structure to form an aircraft wing structure according to the invention, the unitary shell structure comprising a partial front spar, a partial rear spar, a further partial spar and a wing skin.

Preferably, the unitary shell structure includes at least one flange outwardly overhanging one of the partial front and rear spars. Front and rear flanges may be provided to outwardly overhang the partial front and rear spars respectively.

Advantageously, aircraft systems equipment is attached to at least one of the partial front or rear spars.

The invention further provides a method of forming an aircraft wing structure comprising first and second unitary shell structures, each shell structure comprising a partial front spar, a partial rear spar, a further partial spar and a wing skin; the method comprising connecting the partial front spars of each shell structure, the partial rear spars of each shell structure and the further partial spars of each shell structure so as to overlap to form front and rear spars and a further spar respectively.

Preferably, the method further comprises the step of forming the first and second unitary shell structures. The shell structures may be formed from composite material by any process known to the skilled person.

Advantageously, the shell structures are connected by being bonded together. This may be effected by applying a plurality of discrete adhesive sections to one or both shell structures. The discrete adhesive sections may be arranged in a herringbone pattern.

The method may further comprise the step of attaching aircraft systems equipment to at least one of the shell structures. This step may be carried out before the partial front spars and partial rear spars of the shell structures are connected together.

Preferably, the step of forming the shell structures also includes the step of forming at least one flange outwardly overhanging one of the partial front and rear spars, and the method further comprises the step of attaching a wing leading edge or trailing edge to a flange.

### BRIEF DESCRIPTION OF THE DRAWINGS

The invention will now be described, by way of example, with reference to the accompanying drawings in which:
Figure 1 is a plan view of an aircraft including a wing structure constructed according to the invention;
Figure 2 is a sectional view of components awing structure falling outside the scope of the claims;
Figure 3a is a sectional view of the components of Figure 2 being brought together;
Figure 3b shows the components of Figure 3a being bonded together;
Figure 4 is a sectional view of alternative components falling outside the scope of the claims;
Figure 5 is a sectional view of a wing structure constructed according to the invention;
Figure 6 is a sectional view of a wing structure constructed according to an alternative embodiment of the invention; and
Figure 7 is a flow chart of a method of constructing an aircraft wing structure according to the invention.

### DETAILED DESCRIPTION OF EMBODIMENTS OF THE TECHNOLOGY

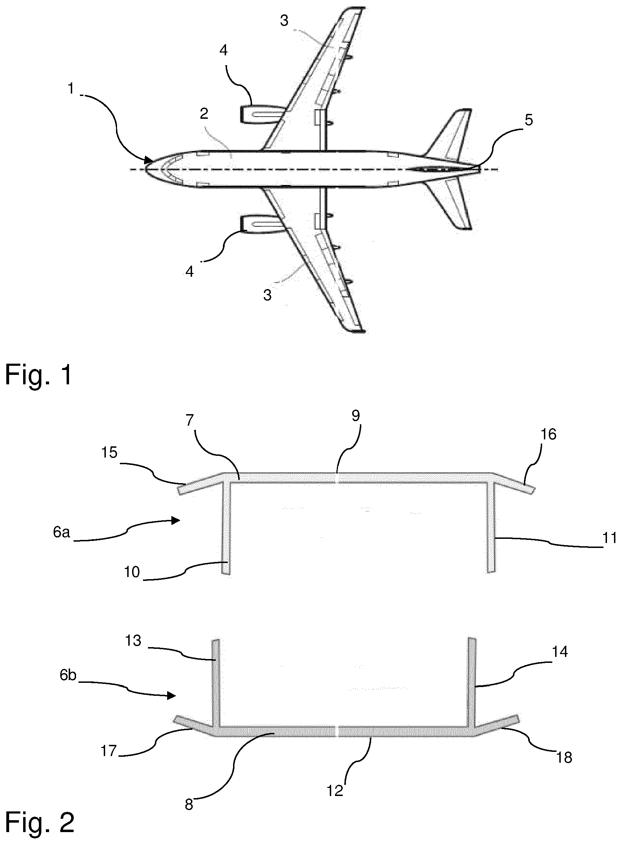

With reference to Figure 1, an aircraft in the form of a typical transonic commercial passenger aeroplane is shown and indicated generally by the reference numeral 1. The aircraft 1 comprises a fuselage 2, wings 3, main engines 4 and a tail 5. It will be appreciated that this invention is applicable to a wide variety of aircraft types. For example, the aircraft may be for military purposes; may be for transporting passengers and/or cargo; may have jets, propellers or other propulsions systems; and may have any one of a variety of fuselage/wing configurations.

Each of the wings 3 comprises a wing box 6, otherwise known as a torsion box. The wing box 6 is the primary load-carrying structure of the wing; it forms the structural centre of the wings and is also the attachment point for other wing components, such as a leading edge, a trailing edge and wing tip or winglet devices.

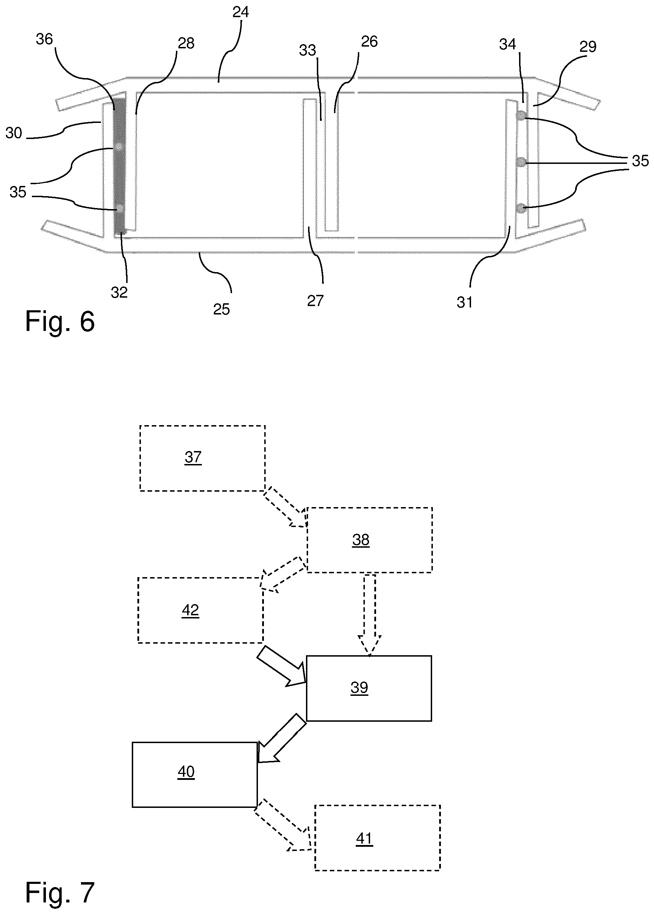

Components configured to form an aircraft wing structure in the form of a wing box 6 not being part of the claimed subject-matter are shown in simplified form in Figure 2, and a method of constructing both this wing box and a wing box constructed according to the invention is set out in the flow chart of Figure 7. The sections of the flow chart indicated by broken lines are optional steps. The components comprise first and second shell structures, 7 and 8 respectively. Each shell structure 7, 8 is a unitary structure made from a composite material, such as carbon-fibre reinforced plastic (CFRP). One method of producing CFRP parts is by layering sheets of carbon fibre cloth into a mould. The alignment and weave of the cloth fibres is chosen to optimize the strength and stiffness properties of the resulting material. The mould is then filled with epoxy and is heated or air-cured. The carbon fibre cloth may have epoxy pre-impregnated into the fibres (a so-called pre-preg). The result is the production of laminated skin panels, which can be arranged to create a very strong, but lightweight structure. The method of constructing the wing box according to the invention may include the step of forming the shell structures (optional step 37 of Figure 7) by any method known to the skilled person. Alternatively, the shell structures 7, 8 may be pre-made by a supplier and brought in for assembly.

The first shell structure 7 is arranged to form an upper portion 6a of the wing box and comprises an upper wing skin 9, a front partial spar 10 and a rear partial spar 11. The partial spars 10, 11 depend downwardly from the upper wing skin 9 and extend along the span of the wing box 6. The second shell structure 8 is arranged to form a lower portion 6b of the wing box and comprises a lower wing skin 12, a front partial spar 13 and a rear partial spar 14. The front and rear partial spars 13, 14 extend upwardly from the lower wing skin 12 along the span of the wing box 6.

Each shell structure 7, 8 includes flanges 15-18 extending outwardly from the front and rear of the respective wing skin portion. The first shell structure 7 has a frontward extending flange 15 and a rearward extending flange 16, both extending from the upper wing skin 9. The second shell structure 8 has a frontward extending flange 17 and a rearward extending flange 18, both extending from the lower wing skin 12. Each flange 15-18 extends along the length of the shell structure and forms a bracket for the mounting of equipment, such as leading and/or trailing edge components and/or moveable devices, such as flight control surfaces, as will be discussed later in this specification.

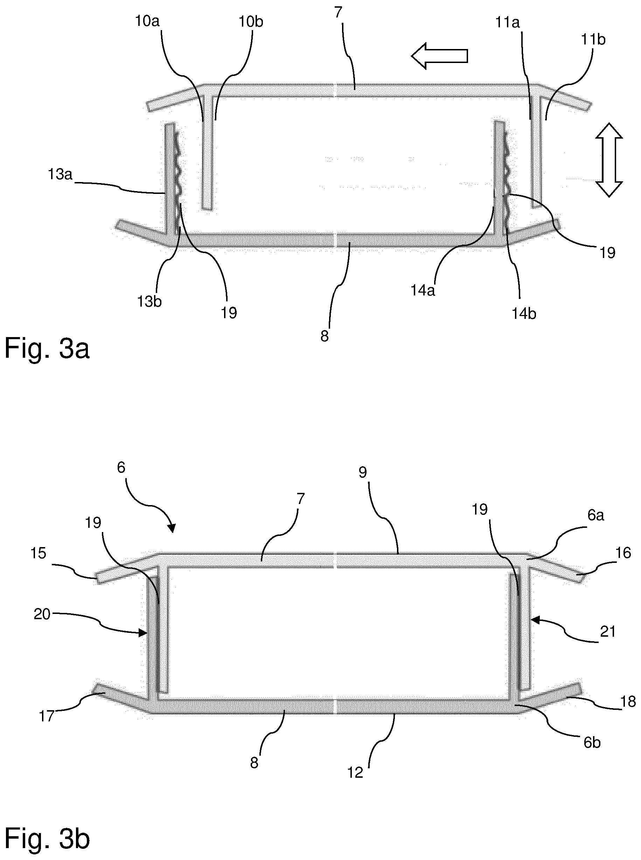

Each of the partial spars 10, 11, 13, 14 has frontward faces 10a, 11a, 13a and 14a respectively; and rearward faces 10b, 11b, 13b, 14b respectively, as shown in Figure 3a. In order to make the wing box 6, adhesive 19 may be applied to at least some of the faces of the partial spars, and the shell structures are subsequently brought together, as indicated by arrows in Figure 3a, so that the two front partial spars 10, 13 overlap to form a front spar 20 and the rear partial spars 11, 14 overlap to form a rear spar 21. The assembled wing box 6 and spars 20, 21 are shown in Figure 3b. In Figure 3a, adhesive is depicted as having been applied to the rearward faces 13b, 14b of the front partial spar and rear partial spar of the second (lower) shell structure 8. Of course, adhesive could be applied to the other faces 13a, 14a of the front and rear partial spars; to faces of the front and rear partial spars of the first (upper) shell structure (such as front faces 10a, 11a); or any combination thereof.

Adhesive may be applied by any suitable method known to the skilled person. In the drawings, the adhesive 19 is shown as a continuous layer; however, it may be advantageous to apply adhesive in discrete sections forming islands of adhesive. The discrete adhesive sections may take any suitable form; for example irregular blobs, square shapes forming a chequerboard pattern or rectangles arranged to form a regular pattern of L-shapes resembling a herringbone pattern. The discrete adhesive sections may help to provide improved structural support should a crack occur in one of the discrete adhesive sections. For example, the discrete sections may help to prevent cracks from propagating along the bond line. A herringbone pattern may help to provide improved load support and distribution by providing adjacent discrete adhesive sections which extend in different directions on the faces of the partial spars.

After application of the adhesive 19 (which is optional method step 38 of Figure 7), the two shell structures 7, 8 are brought towards each other by relative movement so that faces of the front partial spars 10, 13 are brought into intimate contact, as are faces of the rear partial spars 11, 14. This bringing together of the shell structures 7, 8 so that the partial spars 10, 13 and 11, 14 overlap is method step 39 of Figure 7. In Figure 3a, the first (upper) shell structure 7 is shown being moved vertically with respect to the second shell structure 8, and then moved forward horizontally so that the frontward faces 10a, 11a of the front partial spar and rear partial spar of the first shell structure are brought up against the rearward faces 13b, 14b of the partial spars of the second shell structure that are coated with adhesive 19. Of course, this bringing together of the shell structures 7, 8 could be effected by bringing the second shell structure up towards the first shell structure; or by movement of both shell structures. The invention permits relative movement of the two shell structures up to the point of connecting the partial spars together. Relative vertical movement of the shell structures 7, 8 changes the amount of overlap of the partial spars; this allows engineering tolerances to be mitigated, so that a desired total wing thickness may be achieved in line with aerodynamic and internal fuel volume constraints. In effect, there is only one joining face to manage - with both partial spars of the first shell structure to one side of both partial spars of the second shell structure. This facilitates assembly of the wing box structure 6.

The final part of the assembly process (method step 40) comprises the joining of the shell structures 7, 8 to form the wing box 6. This part of the process typically involves setting or curing of the adhesive 19. The adhesive may be a cold curing adhesive, curable at room temperature. Alternatively, an adhesive could be employed that is cured by the application of heat or of UV light. The overlapping partial spars 10 and 13, and 11 and 14, may be clamped together during the curing process. Alternatively, temporary fasteners may be used to hold the overlapping partial spars together during curing. As an alternative to the application of adhesive to the shell structures, fasteners, such as rivets, could be employed to join the overlapping partial spars together. Alternatively, a combination of adhesive and fasteners could be used. Thermoplastic welding may also be employed, or any other suitable joining technique known to the skilled person.

As a further alternative, one or both of the shell structures 7, 8 may be formed in an uncured, or partially uncured, condition, and maintained in that state until the joining/curing step 40 of the method of assembly. At this stage the shell structure(s) 7, 8 would be completely co-cured with the adhesive. This would allow the full wing box 6 to be consolidated in one curing step.

The complete wing box structure 6 comprises an upper wing skin 9, lower wing skin 12, front spar 20 and rear spar 21, formed by a low number of components and one joining face. The wing box structure 6 is lightweight, strong and durable, with a lower overall part count than has been conventionally achievable. The wing box 6 is easy and quick to assemble, making it suitable for automated assembly.

In these drawings, the shell structures 7, 8 are depicted as having the same shape, with the lower shell structure 8 simply being the inverse of the upper shell structure 7. Such an arrangement would be easy to manufacture as only one set of moulds would be required to form the shell structures. It is anticipated that the shell structures 7, 8 would likely have different respective overall shapes, particularly the wing skin parts 9, 12, in dependence on the desired aerodynamic profile of the completed wing.

As previously mentioned, the shell structures 7, 8 include flanges 15-18. In the assembled wing box 6, these form brackets for the mounting of secondary structures, such as fixed trailing edge panels, leading edge panels, flight control surfaces, or any combination thereof, by methods known to the skilled person. The subsequent mounting of secondary structures to the wing box 6 is optional step 41 of Figure 7. The flanges 15-18 are formed as an integral part of the respective shell structure, with carbon fibres running continuously from the wing skins 9 and 12 outwardly into the flange parts 15, 16 and 17, 18 respectively.

Previously, such flanges were formed as part of the adjacent spar by, for example, making the spar C-shaped or I-shaped. The combined spar and flanges were then added to the wing box by means of a bolted joint extending through the flange of the spar and the wing skin. However, a fastener-filled hole under compression or tension causes reductions in the strain that can be absorbed by the wing skin. It has been proposed to overcome this problem by integrating a spar and wing skin together into a single component. However, a flange or bracket would then need to be bolted to that spar. In-tank access in the wing would be needed to facilitate installation, or at the very least a drilling operation to pre-install the flange before assembling the wing box. Furthermore, the gap between the flange and the wing skin would need to be filled to provide a tolerable aerodynamic surface. By providing shell structures 7, 8 having integral flanges 15-18, the invention provides brackets for the attachment of secondary wing structures without detrimentally affecting the strength of the completed wing box 6, and with no extra assembly steps required.

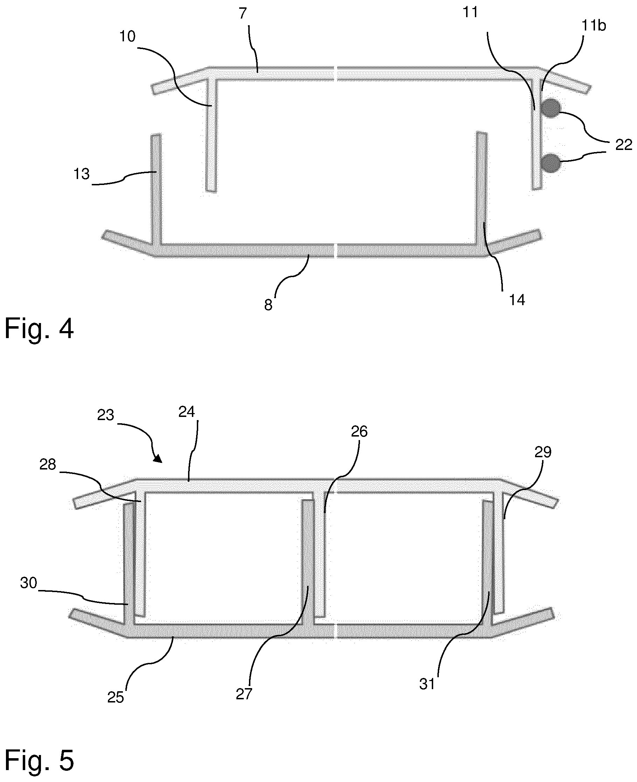

Figure 4 shows the components of another wing box structure not being part of the claimed subject-matter. In this example, the shell structures 7, 8, are substantially similar to those shown in Figures 2 and 3, but one of the shell structures 7 has been pre-equipped with aircraft systems equipment 22 (optional method step 42 of Figure 7) prior to the shell structures 7, 8 being assembled into a wing box. In this example, the equipment 22 is shown as having been attached to the rearward face 11b of the rear partial spar 11. Of course, either or both partial spars 10, 11, 13, 14 of either or both shell structures 7, 8 could be equipped prior to assembly. The equipment 22 could include electrical harnesses, electrical components, cables (e.g. fibre optic cables), hydraulic systems and pipework, fuel lines, or any combination thereof. Previously, it was not possible to pre-equip any part of a wing box with equipment because the structure would subsequently need to be drilled for assembly with fasteners, and the resulting swarf from drilling could cause contamination or damage to the equipment. In this embodiment, the assembly of the shell structures 7, 8 to form the wing box 6 would likely require a cold curing or UV-cured adhesive to be employed on the partial spars, as the application of heat may result in damage to the equipment. This example may further reduce assembly time and may allow a reduction in inventory. This is because the systems equipment 22 may be installed at any convenient time and not merely when assembly of the wing box structure 6 is completely finished.

Figure 5 illustrates an assembled wing box structure 23 constructed according to the invention. In this embodiment, each of the shell structures 24, 25 has been formed with a further partial spar 26, 27 respectively, intermediate the front and rear partial spars 28-31. When the shell structures 24, 25 are brought together, the front partial spars 28, 30 overlap to form a front spar; the rear partial spars 29, 31 overlap to form a rear spar; and the intermediate partial spars 26, 27 overlap to form an intermediate spar. Adhesive may be applied to any or all of the partial spars 26-31 prior to assembling the wing box 23; alternatively (or additionally), fasteners or other joining techniques may be used to join the partial spars together. The provision of an intermediate spar 26, 27 improves the load-bearing capability of the completed wing. Of course, several intermediate spars may be formed by creating shell structures having a plurality of partial intermediate spar portions which are arranged to be joined together by adhesive (or fasteners) when the wing box structure is assembled. This embodiment of the invention has further strength benefits, to the extent that one or more ribs or other reinforcing components may be omitted from the wing.

Figure 6 shows a wing box structure constructed according to another embodiment of the invention. In this variant, the shell structure components 24, 25 are the same as those in Figure 5, with each component comprising front (28, 30), rear (29, 31) and intermediate (26, 27) partial spars. In this embodiment, the shell structures 24, 25 are assembled so that the partial spars overlap but are slightly spaced from one another to form spars having internal cavities 32, 33 and 34. These cavities 32-34 are suitable spaces for the installation of aircraft systems equipment 35, such as wires, cables and/or sensors. The shell structures 24, 25 may be pre-equipped with aircraft systems equipment 35 prior to assembly into a wing box (as in optional method step 42). In this drawing, equipment 35 is shown in the cavities 32, 34 between the front partial spars 28, 30 and rear partial spars 29, 31 respectively. Of course, equipment 35 may be installed in the cavity 33 between the intermediate spar portions 26, 27. The front partial spars 28, 30 are shown as being bonded together by sufficient adhesive 36 to fill the cavity 32. Equipment 35 may be incorporated into the bonding adhesive 36 itself, or placed into the spaces between discrete adhesive sections. Adhesive is absent from the cavity 34 between the rear partial spars 29, 31. Instead, equipment 35 may be fastened to either or both rear partial spars 29, 31 prior to assembly, either directly by means of fasteners, or via wiring harnesses (not shown) or other mounting devices. The rear partial spars 29, 31 may then be joined by means of fasteners (not shown) arranged to space the partial spars from each other so as to form the cavity 34. Similarly, the intermediate partial spars 26, 27 may be joined so that there is a predetermined distance between them. As a further alternative, the shell structures 24, 25, may be designed so that, when assembled, there is a cavity between some of the partial spars and no cavity (i.e. intimate contact) between others of the partial spars. Installing equipment 35 in the cavities 32-34 between the partial spars may result in a neater organisation of systems equipment and a simplified interface for other equipment in the wing, as well as providing an opportunity to incorporate more aircraft systems equipment in the wing box.

Variations may be made without departing from the scope of the invention. For example, although the invention has been described with reference to the construction of the main wing box structure, the invention would be particularly suitable for constructing a wing tip structure, such as a folding wing tip, winglet or downlet. The invention could also be employed to form any or all of the parts of the empennage, such as the tail fin, the tail plane, elevators and/or rudder. Furthermore, the invention could be employed to form leading edge or trailing edge panels; or flight control surfaces, such as flaps, slats or spoilers. Further variations of the invention will be apparent to the person skilled in the art without departing from the content of the appended claims.

## Claims

1. An aircraft wing structure (23) comprising first and second unitary shell structures (24, 25), each shell structure comprising a partial front spar (28, 30), a partial rear spar (29, 31) and a wing skin; the partial front spars (28, 30) of each shell structure and the partial rear spars (29, 31) of each shell structure being arranged to overlap to form front and rear spars respectively, **characterised in that** the first and second shell structures (24, 25) each further comprise at least one further partial spar (26, 27), and the or each further partial spar of each shell structure are arranged to overlap to form at least one further spar.

2. An aircraft wing structure as claimed in claim 1, in which each shell structure (24, 25) is formed of a composite material.

3. An aircraft wing structure as claimed in claim 1 or 2, in which the shell structures (24, 25) are bonded together.

4. An aircraft wing structure as claimed in claim 3, in which the shell structures (24, 25) are bonded together via a plurality of discrete adhesive sections.

5. An aircraft structure as claimed in claim 4, in which the discrete adhesive sections are arranged in a herringbone pattern.

6. An aircraft wing structure as claimed in any preceding claim, in which the partial front spar of the first shell structure and the partial front spar of the second shell structure are spaced from each other to form an equipment space (32).

7. An aircraft wing structure as claimed in any preceding claim, in which the partial rear spar of the first shell structure and the partial rear spar of the second shell structure are spaced from each other to form an, or a further, equipment space (34).

8. An aircraft wing structure as claimed in any preceding claim, further comprising aircraft systems equipment (35) attached to at least one of the partial front or rear spars.

9. An aircraft wing structure as claimed in any preceding claim, in which at least one of the first and second shell structures further comprises at least one flange outwardly overhanging one of the partial front and rear spars.

10. An aircraft wing structure as claimed in any one of claims 1 to 8, in which the first and second shell structures each further comprise front and rear flanges outwardly overhanging the partial front and rear spars respectively.

11. An aircraft wing structure as claimed in claim 9 or 10, further comprising a wing leading edge or trailing edge attached to a flange.

12. An aircraft wing structure as claimed in claim 11, in which the leading edge or trailing edge includes at least one flight control surface.

13. An aircraft wing structure as claimed in any preceding claim in the form of a wing box (6), wing tip or winglet.

14. An aircraft wing (3) comprising an aircraft wing structure as claimed in any preceding claim.

15. An aircraft (1) including an aircraft wing structure as claimed in any one of claims 1 to 13, or an aircraft wing as claimed in claim 14.

16. A unitary shell structure configured to be attachable to another shell structure to form an aircraft wing structure according to any one of claims 1 to 13 .

17. A method of forming an aircraft wing structure comprising first and second unitary shell structures, each shell structure comprising a partial front spar, a partial rear spar, a further partial spar and a wing skin; the method comprising effecting relative movement of the first and second shell structures so that the partial front spars, the partial rear spars and the partial further spars of the shell structures overlap to form front and rear spars and a further spar respectively.

18. A method as claimed in claim 17, further comprising the step of forming the first and second unitary shell structures.

19. A method as claimed in claim 17 or 18, in which the shell structures are formed from composite material.

20. A method as claimed in any one of claims 17 to 19, in which the shell structures are connected by being bonded together.

21. A method as claimed in claim 20, in which the shell structures are bonded together via a plurality of discrete adhesive sections.

22. A method as claimed in claim 21, in which the discrete adhesive sections are arranged in a herringbone pattern.

23. A method as claimed in any one of claims 17 to 22, further comprising the step of attaching aircraft systems equipment to at least one of the shell structures.

24. A method as claimed in claim 23, in which the step of attaching equipment to the or each shell structure is carried out before the step of effecting relative movement of the first and second shell structures so that the partial front spars, the partial rear spars and the partial further spars of the shell structures overlap to form front and rear spars and a further spar.

25. A method as claimed in any one of claims 17 to 24, in which at least one of the first and second shell structures further comprises at least one flange outwardly overhanging one of the partial front and rear spars, and the method further comprises the step of attaching a wing leading edge or trailing edge to a flange.

## Patentansprüche

1. Flugzeugflügelstruktur (23), die eine erste und zweite einstückige Mantelstruktur (24, 25) umfasst, wobei jede Mantelstruktur einen vorderen Teilholm (28, 30), einen hinteren Teilholm (29, 31) und eine Flügelhaut umfasst; wobei die vorderen Teilholme (28, 30) jeder Mantelstruktur und die hinteren Teilholme (29, 31) jeder Mantelstruktur überlappend angeordnet sind, um vordere bzw. hintere Holme zu bilden, **dadurch gekennzeichnet, dass** die erste und zweite Mantelstruktur (24, 25) jeweils ferner mindestens einen weiteren Teilholm (26, 27) umfassen und der oder jeder weitere Teilholm jeder Mantelstruktur überlappend angeordnet sind, um mindestens einen weiteren Holm zu bilden.

2. Flugzeugflügelstruktur nach Anspruch 1, wobei jede Mantelstruktur (24, 25) aus einem Verbundmaterial gebildet ist.

3. Flugzeugflügelstruktur nach Anspruch 1 oder 2, wobei die Mantelstrukturen (24, 25) miteinander verklebt sind.

4. Flugzeugflügelstruktur nach Anspruch 3, wobei die Mantelstrukturen (24, 25) über mehrere einzelne Klebstoffabschnitte miteinander verklebt sind.

5. Flugzeugstruktur nach Anspruch 4, wobei die einzelnen Klebstoffabschnitte in einem Fischgrätenmuster angeordnet sind.

6. Flugzeugflügelstruktur nach einem der vorhergehenden Ansprüche, wobei der vordere Teilholm der ersten Mantelstruktur und der vordere Teilholm der zweiten Mantelstruktur voneinander beabstandet sind, um einen Ausrüstungsraum (32) zu bilden.

7. Flugzeugflügelstruktur nach einem der vorhergehenden Ansprüche, wobei der hintere Teilholm der ersten Mantelstruktur und der hintere Teilholm der zweiten Mantelstruktur voneinander beabstandet sind, um einen oder einen weiteren Ausrüstungsraum (34) zu bilden.

8. Flugzeugflügelstruktur nach einem der vorhergehenden Ansprüche, ferner umfassend Flugzeugsystemausrüstung (35), die an dem vorderen und/oder hinteren Teilholm angebracht ist.

9. Luftfahrzeugflügelstruktur nach einem der vorhergehenden Ansprüche, wobei die erste und/oder zweite Mantelstruktur ferner mindestens einen Flansch umfasst, der entweder über den vorderen oder hinteren Teilholm nach außen vorsteht.

10. Flugzeugflügelstruktur nach einem der Ansprüche 1 bis 8, wobei die erste und zweite Mantelstruktur jeweils ferner einen vorderen und hinteren Flansch umfassen, die über den vorderen bzw. hinteren Teilholm nach außen vorstehen.

11. Flugzeugflügelstruktur nach Anspruch 9 oder 10, die ferner eine Flügelvorderkante oder -hinterkante umfasst, die an einem Flansch angebracht ist.

12. Flugzeugflügelstruktur nach Anspruch 11, wobei die Vorderkante oder Hinterkante mindestens eine Flugsteuerfläche umfasst.

13. Flugzeugflügelstruktur nach einem der vorhergehenden Ansprüche in Form eines Flügelkastens (6), einer Flügelspitze oder eines Winglets.

14. Flugzeug (3), das eine Flugzeugflügelstruktur nach einem der vorhergehenden Ansprüche umfasst.

15. Flugzeug (1), das eine Flugzeugflügelstruktur nach einem der Ansprüche 1 bis 13 oder einen Flugzeugflügel nach Anspruch 14 umfasst.

16. Einstückige Mantelstruktur, die dazu ausgelegt ist, an einer anderen Mantelstruktur anbringbar zu sein, um eine Flugzeugflügelstruktur nach einem der Ansprüche 1 bis 13 zu bilden.

17. Verfahren zum Bilden einer Flugzeugflügelstruktur, die eine erste und zweite einheitliche Mantelstruktur umfasst, wobei jede Mantelstruktur einen vorderen Teilholm, einen hinteren Teilholm, einen weiteren Teilholm und eine Flügelhaut umfasst; wobei das Verfahren das Bewirken einer Relativbewegung der ersten und zweiten Mantelstruktur umfasst, so dass sich die vorderen Teilholme, die hinteren Teilholme und die weiteren Teilholme der Mantelstrukturen überlappen, um vordere und hintere Holme bzw. einen weiteren Holm zu bilden.

18. Verfahren nach Anspruch 17, das ferner den Schritt des Bildens der ersten und zweiten einstückigen Mantelstruktur umfasst.

19. Verfahren nach Anspruch 17 oder 18, wobei die Mantelstrukturen aus Verbundmaterial gebildet werden.

20. Verfahren nach einem der Ansprüche 17 bis 19, wobei die Mantelstrukturen durch Verkleben miteinander verbunden werden.

21. Verfahren nach Anspruch 20, wobei die Mantelstrukturen über mehrere einzelne Klebstoffabschnitte miteinander verklebt werden.

22. Verfahren nach Anspruch 21, wobei die einzelnen Klebstoffabschnitte in einem Fischgrätenmuster angeordnet sind.

23. Verfahren nach einem der Ansprüche 17 bis 22, ferner umfassend den Schritt des Anbringens von Flugzeugsystemausrüstung an mindestens einer der Mantelstrukturen.

24. Verfahren nach Anspruch 23, wobei der Schritt des Anbringens von Ausrüstung an der oder jeder Mantelstruktur vor dem Schritt des Bewirkens einer Relativbewegung der ersten und zweiten Mantelstruktur durchgeführt wird, so dass sich die vorderen Teilholme, die hinteren Teilholme und die weiteren Teilholme der Mantelstrukturen überlappen, um vordere und hintere Holme und einen weiteren Holm zu bilden.

25. Verfahren nach einem der Ansprüche 17 bis 24, wobei die erste und/oder zweite Mantelstruktur ferner mindestens einen Flansch umfasst, der entweder über den vorderen oder hinteren Teilholm nach außen vorsteht, und das Verfahren ferner den Schritt des Anbringens einer Flügelvorderkante oder -hinterkante an einem Flansch umfasst.

## Revendications

1. Structure (23) d'aile d'avion comprenant des première et deuxième structures (24, 25) de coque monoblocs, chaque structure de coque comprenant un longeron avant partiel (28, 30), un longeron arrière partiel (29, 31) et un revêtement d'aile ; les longerons partiels avant (28, 30) de chaque structure de coque et les longerons partiels arrière (29, 31) de chaque structure de coque étant disposés de manière à se chevaucher pour former respectivement des longerons avant et arrière, **caractérisé en ce que** les première et deuxième structures (24, 25) de coque comprennent chacune au moins un autre longeron partiel (26, 27), et **en ce que** l'autre ou chaque autre longeron partiel de chaque structure de coque est disposé de manière à se chevaucher pour former au moins un autre longeron partiel.

2. Structure d'aile d'avion selon la revendication 1, chaque structure (24, 25) de coque étant formée d'un matériau composite.

3. Structure d'aile d'avion selon la revendication 1 ou 2, les structures (24, 25) de coque étant liées ensemble.

4. Structure d'aile d'avion selon la revendication 3, les structures (24, 25) de coque étant liées ensemble par l'intermédiaire d'une pluralité de sections adhésives discrètes.

5. Structure d'avion selon la revendication 4, les sections adhésives discrètes étant agencées selon un motif en chevrons.

6. Structure d'aile d'avion selon l'une quelconque des revendications précédentes, le longeron avant partiel de la première structure de coque et le longeron avant partiel de la deuxième structure de coque étant espacés l'un par rapport à l'autre pour former un compartiment (32) d'équipement.

7. Structure d'aile d'avion selon l'une quelconque des revendications précédentes, le longeron arrière partiel de la première structure de coque et le longeron arrière partiel de la deuxième structure de coque étant espacés l'un par rapport à l'autre pour former un compartiment (34) d'équipement ou un compartiment supplémentaire.

8. Structure d'aile d'aéronef selon l'une quelconque des revendications précédentes, comprenant en outre un équipement (35) de systèmes d'aéronef fixé à au moins l'un des longerons partiels avant ou arrière.

9. Structure d'aile d'avion selon l'une quelconque des revendications précédentes, au moins l'une des première et deuxième structures de coque comprenant en outre au moins une bride surplombant vers l'extérieur l'un des longerons partiels avant et arrière.

10. Structure d'aile d'avion selon l'une quelconque des revendications 1 à 8, les première et deuxième structures de coque comprenant chacune en outre des brides avant et arrière surplombant respectivement vers l'extérieur les longerons avant et arrière partiels.

11. Structure d'aile d'avion selon la revendication 9 ou 10, comprenant en outre un bord d'attaque ou un bord de fuite d'aile fixé à une bride.

12. Structure d'aile d'avion selon la revendication 11, le bord d'attaque ou le bord de fuite comprenant au moins une surface de commande de vol.

13. Structure d'aile d'avion selon l'une quelconque des revendications précédentes, sous la forme d'un caisson (6) d'aile, d'une extrémité d'aile ou d'une ailette.

14. Aile (3) d'aéronef comprenant une structure d'aile d'aéronef selon l'une quelconque des revendications précédentes.

15. Aéronef (1) comprenant une structure d'aile d'aéronef selon l'une quelconque des revendications 1 à 13, ou une aile d'aéronef selon la revendication 14.

16. Structure de coque monobloc configurée pour pouvoir être fixée à une autre structure de coque pour former une structure d'aile d'aéronef selon l'une quelconque des revendications 1 à 13.

17. Procédé de formation d'une structure d'aile d'aéronef comprenant des première et deuxième structures de coque monoblocs, chaque structure de coque comprenant un longeron avant partiel, un longeron arrière partiel, un autre longeron partiel et un revêtement d'aile ; le procédé comprenant la réalisation d'un mouvement relatif des première et deuxième structures de coque de telle sorte que les longerons avant partiels, les longerons arrière partiels et les longerons supplémentaires partiels des structures de coque se chevauchent pour former respectivement des longerons avant et arrière et un longeron supplémentaire.

18. Procédé selon la revendication 17, comprenant en outre l'étape consistant à former les première et deuxième structures de coque monoblocs.

19. Procédé selon la revendication 17 ou 18, les structures de coque étant formées d'un matériau composite.

20. Procédé selon l'une quelconque des revendications 17 à 19, les structures de coque étant liées en étant collées ensemble.

21. Procédé selon la revendication 20, les structures de coque étant collées ensemble par l'intermédiaire d'une pluralité de sections adhésives discrètes.

22. Procédé selon la revendication 21, les sections adhésives discrètes étant agencées selon un motif en chevrons.

23. Procédé selon l'une quelconque des revendications 17 à 22, comprenant en outre l'étape consistant à fixer un équipement de systèmes d'aéronef à au moins l'une des structures de coque.

24. Procédé selon la revendication 23, l'étape de fixation de l'équipement à la ou à chaque structure de coque étant réalisée avant l'étape consistant à effectuer un mouvement relatif des première et deuxième structures de coque de telle sorte que les longerons avant partiels, les longerons arrière partiels et les longerons supplémentaires partiels des structures de coque se chevauchent pour former des longerons avant et arrière et un longeron supplémentaire.

25. Procédé selon l'une quelconque des revendications 17 à 24, au moins l'une des première et deuxième structures de coque comprenant en outre au moins une bride surplombant vers l'extérieur l'un des longerons partiels avant et arrière, et le procédé comprenant en outre l'étape consistant à fixer un bord d'attaque ou un bord de fuite d'aile à une bride.
